# EUROPEAN PATENT APPLICATION

(11) **EP 2 302 936 A2**
(43) Date of publication of application: **30.03.2011**
(21) Application number: 10009592.6
(22) Date of filing: 14.09.2010
(51) Int. Cl.: H04N 9/31

(54) **Projection image display device having keystone distortion correction**

(30) Priority: 18.09.2009 JP 2009216596
(71) Applicant: Sanyo Electric Co., Ltd., Osaka 570-8677 (JP)
(72) Inventor: Fujisaki, Takeshi, Moriguchi-shi Osaka 570-8677 (JP); Kaise, Naoki, Moriguchi-shi Osaka 570-8677 (JP); Kodama, Kazunori, Moriguchi-shi Osaka 570-8677 (JP)
(74) Representative: Glawe, Delfs, Moll

(57) **Abstract**

A projector (10) includes: an image signal processing circuit (64) which receives and converts a first image signal to generate a second image signal representing an image to be projected; an image distortion correction unit (68) which corrects the second image signal in response to a correction point on a projected image being changed by an operation done by a user; and an OSD circuit (72) which operates, in response to an image distortion correction process being selected in response to an operation done by the user, to superpose a correction pattern used to allow the user to designate the correction point on the projected image, and thus display the correction pattern and the projected image on a single screen. The OSD circuit (72) includes a switching control unit which switches a color used to display the correction pattern when the image distortion correction process is performed.

## Description

This nonprovisional application is based on Japanese Patent Application No. 2009-216596 filed on September 18, 2009, with the Japan Patent Office, the entire contents of which are hereby incorporated by reference.

### BACKGROUND OF THE INVENTION

### Field of the Invention

The present invention relates generally to projection image display apparatuses and particularly to projection image display apparatuses having a function correcting a distortion of an image displayed on a projection surface.

### Description of the Related Art

Projection image display apparatuses (hereinafter also referred to as projectors) may cause a so called image distortion. More specifically, between the optical axis of light projected by a projector and a screen or a similar projection surface, there may be a relative inclination, and accordingly, an image projected on the projection surface may distort at least in one of horizontal and vertical directions.

Normally, projectors are provided with a correction function for correcting such image distortion. For example, a projector has been studied that has a first trapezoid correction key operated to correct a projected image's trapezoidal distortion in a predetermined direction, and a second trapezoid correction key operated to correct the projected image's trapezoidal distortion in a direction opposite to that associated with the first trapezoid correction key. The projector is operated by a user operating the keys to correct image distortion.

In operating this projector by operating the keys to correct image distortion if an image signal is not sharp it is difficult for the user to visually observe how an image projected and thus displayed on a screen is distorted, resulting in poorly operable image distortion correction.

### SUMMARY OF THE INVENTION

The present invention contemplates a projection image display apparatus with an image distortion correction function that is improved in operability in correcting image distortion.

The present invention in one aspect provides a projection image display apparatus including: an image signal processing unit which receives and converts a first image signal to generate a second image signal representing an image to be projected; an image distortion correction unit which corrects the second image signal in response to a correction point on a projected image being changed by an operation done by a user; and a distortion correction screen generation unit which operates, when an image distortion correction process is selected in response to an operation done by the user, to superpose on the projected image a correction pattern used to allow the user to designate the correction point, and thus display the correction pattern and the projected image on a single screen. The distortion correction screen generation unit includes a switching control unit which switches a color used to display the correction pattern when the image distortion correction process is performed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically shows a configuration of a projection image display apparatus according to a first embodiment of the present invention.
Fig. 2 shows a configuration of a projector shown in Fig. 1.
Fig. 3 illustrates a remote controller shown in Fig. 1.
Fig. 4 illustrates an image distortion correction image.
Fig. 5 illustrates an image distortion correction process according to the first embodiment.
Fig. 6 is a flowchart for illustrating a process according to the first embodiment for controlling how a color that is displayed is switched.
Fig. 7 illustrates designating a color by a user for a correction pattern.
Fig. 8 illustrates a process according to a second embodiment for controlling how a color used to display a correction pattern is switched.
Fig. 9 is a flowchart for illustrating a process according to the second embodiment for controlling how a color that is displayed is switched.
Fig. 10 is a flowchart for illustrating a process according to the second embodiment in an exemplary variation for controlling how a color that is displayed is switched.
Fig. 11 is a flowchart for illustrating a process according to a third embodiment for controlling how a color that is displayed is switched.

### DESCRIPTION OF THE PREFERRED EMBODIMENTS

Hereinafter reference will be made to the drawings to describe the present invention in embodiments. In the figures, identical or corresponding components are identically denoted and will not be described repeatedly in detail.

### First Embodiment

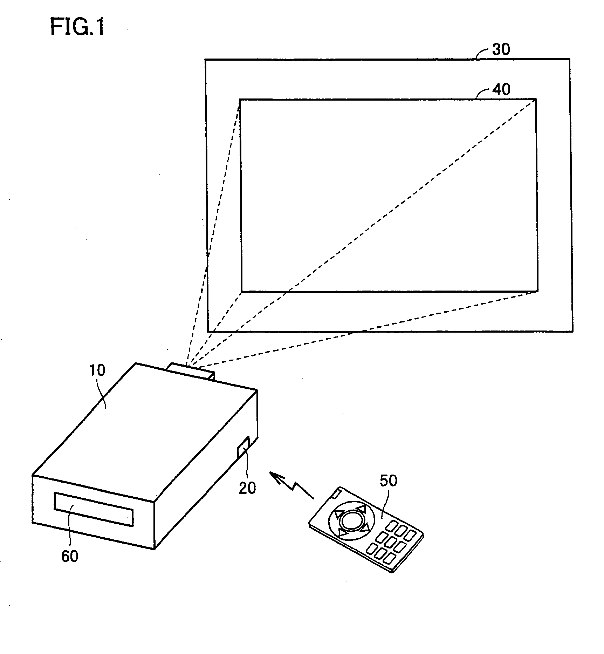

Fig. 1 schematically shows a configuration of a projection image display apparatus according to a first embodiment of the present invention.

With reference to Fig. 1, the first embodiment provides a projection image display apparatus (hereinafter also referred to as a projector) 10 that is a liquid crystal projector utilizing a liquid crystal device to project an image. It projects the light of an image that is displayed by the liquid crystal device on a screen 30 to display a projected image 40. The image may be projected on a surface other than screen 30; it may be projected on a wall surface.

Projector 10 includes a remote controller signal reception unit 20 receiving an infrared modulated, remote controller signal transmitted from a remote controller 50 operated by a user, and an input unit 60. The remote controller signal includes a command signal for remotely controlling projector 10. Input unit 60 includes an input port for receiving an image signal supplied from an external signal supply device (not shown). The signal supply device includes a digital signal supply device outputting digital signals of a digital versatile disc (DVD) reproduction device, a Blu-ray disc reproduction device or the like, and an analog signal supply device outputting an analog signal of a computer or the like.

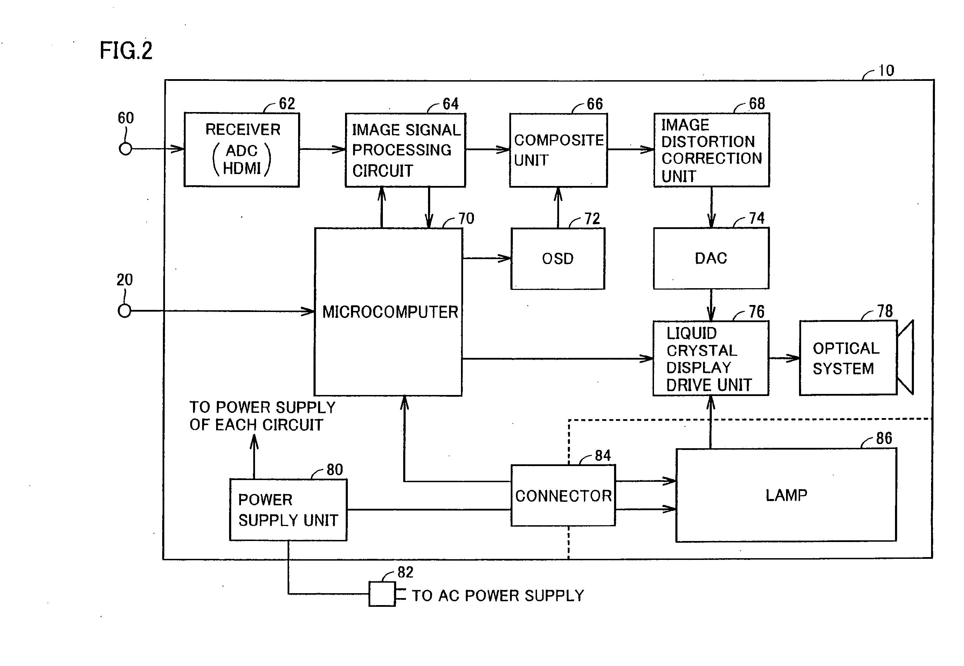

Fig. 2 shows a configuration of projector 10 shown in Fig. 1.

With reference to Fig. 2, projector 10 includes a receiver 62, an image signal processing circuit 64, a composite unit 66, an image distortion correction unit 68, a microcomputer 70, an on-screen-display (OSD) circuit 72, a digital analog converter (DAC) 74, a liquid crystal display drive unit 76, an optical system 78, a power supply unit 80, a connector 84, and a lamp 86.

Microcomputer 70 is operative in response to a command signal received from remote controller 50 via remote controller signal reception unit 20 to generate and output a control command to each component of projector 10.

Receiver 62 receives an image signal from input unit 60 and outputs the image signal. Receiver 62 has an analog digital converter (ADC) function converting a received analog image signal to a digital signal, and an authentication function and a decryption function following a high-bandwidth digital content protection (HDCP) system. The HDCP is used to implement encrypting data transmitted in accordance with high definition multimedia interface (HDMI). This can prevent image signals or the like contents transmitted on digital transmission lines from being maliciously copied. While in this scenario the digital transmission line is a line transmitting data and signals in accordance with the HDMI, it may be a transmission line in accordance with digital visual interface (DVI).

Image signal processing circuit 64 receives an image signal from receiver 62, processes the received signal into a signal for displaying, and outputs the processed signal. More specifically, image signal processing circuit 64 receives an image signal from receiver 62 and writes the signal to a frame memory (not shown) for each one frame (or screen), and also reads an image stored in the frame memory. In this writing and reading process, a variety of image processings are performed to convert a received image signal to generate an image signal, i.e., image data, for an image to be projected.

OSD circuit 72 follows an instruction received from microcomputer 70 to generate: characters and symbols representing a variety of statuses of projector 10; a menu image used in correcting image distortion, adjusting image quality, setting conditions for operations and the like; a pointer image, an underline image and other ornamental images; and the like (hereinafter collectively referred to as an "OSD image") as an OSD image signal, and output the signal to composite unit 66.

Composite unit 66 composites the OSD image signal and the image signal output from image signal processing circuit 64 to generate a composite image signal in the form of image data, and supplies the image data to image distortion correction unit 68.

Note that the OSD image signal is generated by OSD circuit 72 reading OSD data stored in OSD circuit 72 at a memory (not shown) as the user issues an instruction via remote controller 50 to display an OSD image. If the OSD image is not displayed, composite unit 66 does not perform the above described composite process, and the image data output from image signal processing circuit 64 is exactly supplied to image distortion correction unit 68.

Image distortion correction unit 68 corrects image distortion caused by relative inclination between the optical axis of light projected from projector 10 and a projection surface of screen 30. More specifically, image distortion correction unit 68 receives the composite image signal from composite unit 66 and adjusts the signal to generate an image signal representing an image having distortion corrected, and outputs the generated image signal to DAC 74.

More specifically, image distortion correction unit 68 corrects a projected image's distortion by forming a distorted image on each liquid crystal panel, as based on an amount of displacement corresponding to the user's operation and introduced at four corners of the projected image displayed on screen 30. Hereinafter, in the embodiments, such correction will be referred to as "corner distortion correction".
Corner distortion correction will be described more specifically hereinafter.

DAC 74 receives an image signal from image distortion correction unit 68, converts the received signal to an analog signal, and outputs the analog signal to liquid crystal display drive unit 76.

Liquid crystal display drive unit 76, optical system 78 and lamp 86 correspond to a projection unit controlled by microcomputer 70 to operate in response to the image signal output from DAC 74 to project an image on screen 30.

The projection unit operates, as will be described hereinafter. Lamp 86 serving as an illumination device is for example a supervoltage mercury lamp, a metal halide lamp, a xenon lamp or the like. Lamp 86 is detachably attached via connector 84 to projector 10. From lamp 86, light is substantially collimated and thus emitted to liquid crystal display drive unit 76.

Liquid crystal display drive unit 76 includes an optical system including a lens and a prism (not shown), and R, G, B liquid crystal panels. Liquid crystal display drive unit 76 receives light from lamp 86 and passes the light through its internal lens system (not shown), and the light is incident on each of the R, G, B liquid crystal panels such that a uniform distribution in quantity of light is achieved. Of the light incident via the lens system, light of a blue color wavelength band (hereinafter referred to as "B light"), light of a red color wavelength band (hereinafter referred to as "R light"), and light of a green color wavelength band (hereinafter referred to as "G light") are substantially collimated and thus incident on the R, G, B liquid crystal panels. Each liquid crystal panel is driven in accordance with an image signal corresponding to R, G, B provided from DAC 74, and modulates light in accordance with its driven status. The R light, G light, B light modulated by the liquid crystal panels are composited in color by a diachronic prism, and subsequently enlarged and thus projected by a projection lens on screen 30. The projection lens includes a group of lenses imaging projected light on screen 30, and an actuator for changing some of the lenses in the direction of the optical axis to adjust the projected image's zoomed and focused states.

Power supply unit 80 is supplied with power via a plug 82 plugged in a receptacle of an alternating current (AC) power supply (not shown), and supplies the received power to each component internal to projector 10.

The user can use remote controller 50 to input a variety of inputs. Remote controller 50 transmits a remote controller signal, which is in turn input via remote controller signal reception unit 20 to microcomputer 70 to perform a variety of processes corresponding thereto.

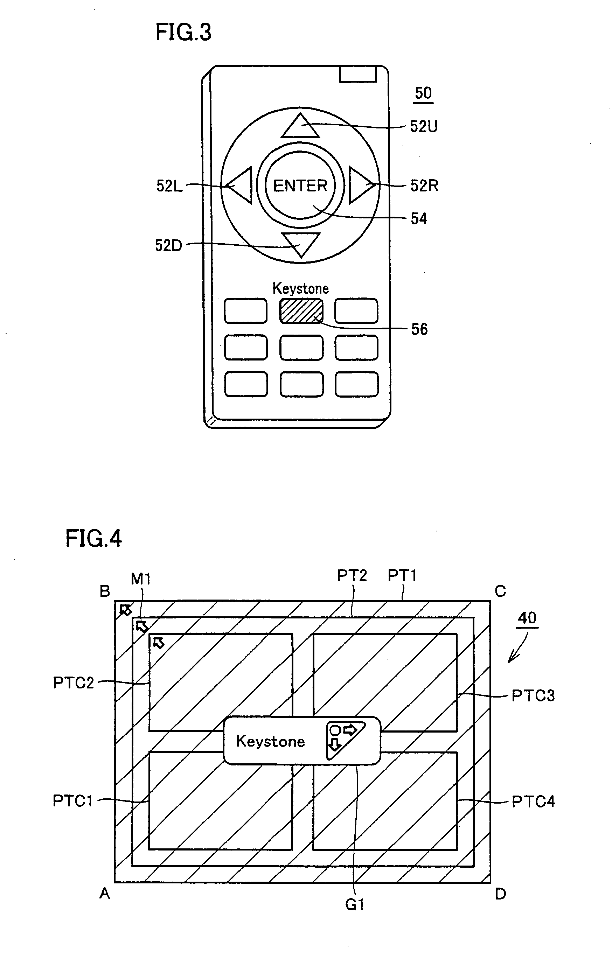

Fig. 3 illustrates remote controller 50. With reference to Fig. 3, remote controller 50 includes adjustment buttons 52U, 52D, 52L, 52R, an Enter button 54, and a Keystone remote controller button 56. The adjustment buttons are an upper adjustment button 52U, a lower adjustment button 52D, a left adjustment button 52L, and a right adjustment button 52R arranged in the form of a cross. In the following description, the four upper, lower, right and left buttons will also collectively be referred to as an adjustment button 52.

When a corner distortion correction process is performed, adjustment button 52 outputs an upper left corner operation signal corresponding to right adjustment button 52R and lower adjustment button 52D, an upper right corner operation signal corresponding to left adjustment button 52L and lower adjustment button 52D, a lower left corner operation signal corresponding to right adjustment button 52R and upper adjustment button 52U, and a lower right corner operation signal corresponding to left adjustment button 52L and upper adjustment button 52U. The upper left corner operation signal is associated with an amount of displacement introduced at the upper left corner on the screen. The upper right corner operation signal is associated with an amount of displacement introduced at the upper right corner on the screen. The lower left corner operation signal is associated with an amount of displacement introduced at the lower left corner on the screen. The lower right corner operation signal is associated with an amount of displacement introduced at the lower right corner on the screen.

Thus, when the corner distortion correction process is performed, the user operates adjustment button 52 to set by how much amounts an image displayed on screen 30 has its four corners displaced. Image distortion correction unit 68 can correct image distortion in accordance with the amounts set for the four corners for displacement. Image distortion is corrected in a process having a procedure, as described hereinafter.

### Image Distortion Correction Process

Initially, the user presses the remote controller 50 Keystone remote controller button 56. In response, an image distortion correction process is selected and started. When the image distortion correction process is selected and started, OSD circuit 72 (Fig. 2) operates to display an image distortion correction image on the same screen as projected image 40.

Fig. 4 illustrates the image distortion correction image. With reference to Fig. 4, when the user presses the remote controller 50 Keystone remote controller button 56, OSD circuit 72 operates to display the image distortion correction image. The image distortion correction image is formed of a corner distortion correction image G1, and a correction pattern-PT1, PT2, PTC1-PTC4 used to allow the user to designate a correction point.

Corner distortion correction image G1 displays a type of an operation menu (an image distortion correction menu), and an indicator indicating how adjustment button 52 (Fig. 3) is operated.

In the figure, correction points A, B, C, D represent four corners of an image displayed on screen 30. In corner distortion correction, correction points A, B, C, D are positionally corrected in response to an operation signal output from adjustment button 52 (the upper left corner operation signal, the upper right corner operation signal, the lower left corner operation signal, and the lower right corner operation signal) to correct a distortion of an image displayed on screen 30.

In the Fig. 4 example, right adjustment button 52R and lower adjustment button 52D are associated with how correction point B (the upper left corner) is displaced. When the user presses right adjustment button 52R and lower adjustment button 52D to displace correction point B, corner distortion correction image G1 displays an indicator indicating how right adjustment button 52R and lower adjustment button 52D are operated.

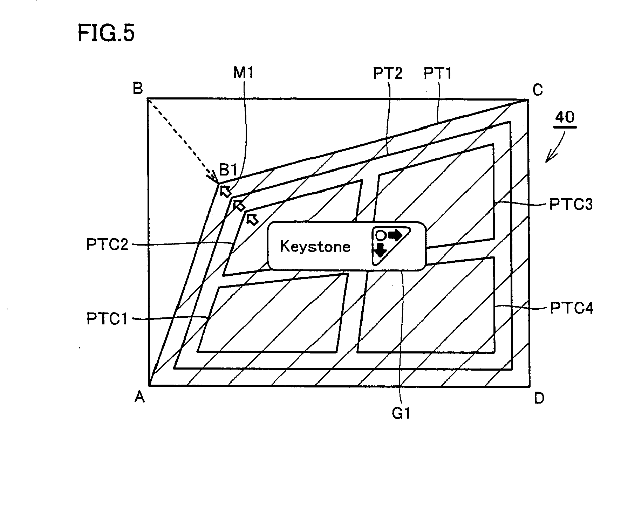

In that condition when the user presses right adjustment button 52R and lower adjustment button 52D, then, as shown in Fig. 5, in corner distortion correction image G1, the indicator corresponding to right adjustment button 52R and lower adjustment button 52D is turned on (or a color displayed is changed). Furthermore, on the same screen as projected image 40, a marker M1 is displayed to indicate that correction point B is subject to displacement.

In the Fig. 5 example, how many times right adjustment button 52R and lower adjustment button 52D are pressed corresponds to by how much amount correction point B is displaced. Image distortion correction unit 68 adjusts an image signal, depending on by how much amount correction point B is displaced, to determine an image formation region in a pixel region of each liquid crystal panel for forming a (real) image based on the image signal.

More specifically, image distortion correction unit 68 displaces correction point B in a direction indicated by an arrow by an amount corresponding to how many times right adjustment button 52R and lower adjustment button 52D are pressed. Correction point B is displaced to a correction point B1. Thus a correction point on screen 30 that corresponds to correction point B 1 of the real image on each liquid crystal panel is displaced by an amount corresponding to how many times right adjustment button 52R and lower adjustment button 52D are pressed. Thus, the image data is corrected to: displace a correction point of an image formation region for forming a real image so that image distortion is corrected and the real image is projected on screen 30 in a normal form; and also minimize the optical transmittance of each pixel included in a region that does not contribute to forming the image. Consequently, the real image is displayed on screen 30 in the normal form.

On the other hand, although not shown, when the user presses left adjustment button 52L and lower adjustment button 52D, then, in corner distortion correction image G1, an indicator corresponding to left adjustment button 52L and lower adjustment button 52D is turned on, and correction point C is displaced by an amount corresponding to how many times left adjustment button 52L and lower adjustment button 52D are pressed.

Furthermore, when the user presses left adjustment button 52L and upper adjustment button 52U, then, in corner distortion correction image G1, an indicator corresponding to left adjustment button 52L and upper adjustment button 52U is turned on, and correction point D is displaced by an amount corresponding to how many times left adjustment button 52L and upper adjustment button 52U are pressed.

Furthermore, when the user presses right adjustment button 52R and upper adjustment button 52U, then, in corner distortion correction image G1, an indicator corresponding to right adjustment button 52R and upper adjustment button 52U is turned on, and correction point A is displaced by an amount corresponding to how many times right adjustment button 52R and upper adjustment button 52U are pressed.

Herein, as shown in Fig. 4 and Fig. 5, when corner distortion correction is performed, correction pattern PT1, PT2, PTC1-PTC4 used to allow the user to designate a correction point is projected on projected image 40.

The correction pattern is formed for example by combining two or more of rectangular frame images PT1, PT2, PTC1-PTC4 substantially similar in form to each liquid crystal panel's pixel region. The two or more of frame images PT1, PT2, PTC1-PTC4 are superposed on projected image 40 and thus displayed.

More specifically, when the user presses Keystone remote controller button 56, OSD circuit 72 is instructed by microcomputer 70 to read OSD data about a correction pattern stored in a memory and output the read OSD data to composite unit 66. Composite unit 66 composites the OSD data about the correction pattern with an image signal output from image signal processing circuit 64 to generate a composite image signal in the form of image data. By such an operation, correction pattern PT1, PT2, PTC1-PTC4 is projected on projected image 40 in performing the corner distortion correction process.

Thus the user can see how the correction pattern's frame images are distorted on screen 30 to visually, easily observe how projected image 40 is distorted. This allows image distortion correction to be done with precision and enhanced in operability.

If the correction pattern is displayed in a color identical or similar to that used to display projected image 40, however, the correction pattern is visually less observable. As a result, the user has difficulty in visually observing how projected image 40 is distorted, resulting in poor operability in image distortion correction.

To overcome such disadvantage, OSD circuit 72 switches a color used to display the correction pattern and thus projects it on projected image 40. OSD circuit 72 instructed by microcomputer 70 to control switching a color to be displayed allows the correction pattern to be displayed on the same screen as projected image 40 in a color different from that used to display projected image 40.

Controlling How Color to Be Displayed Is Switched

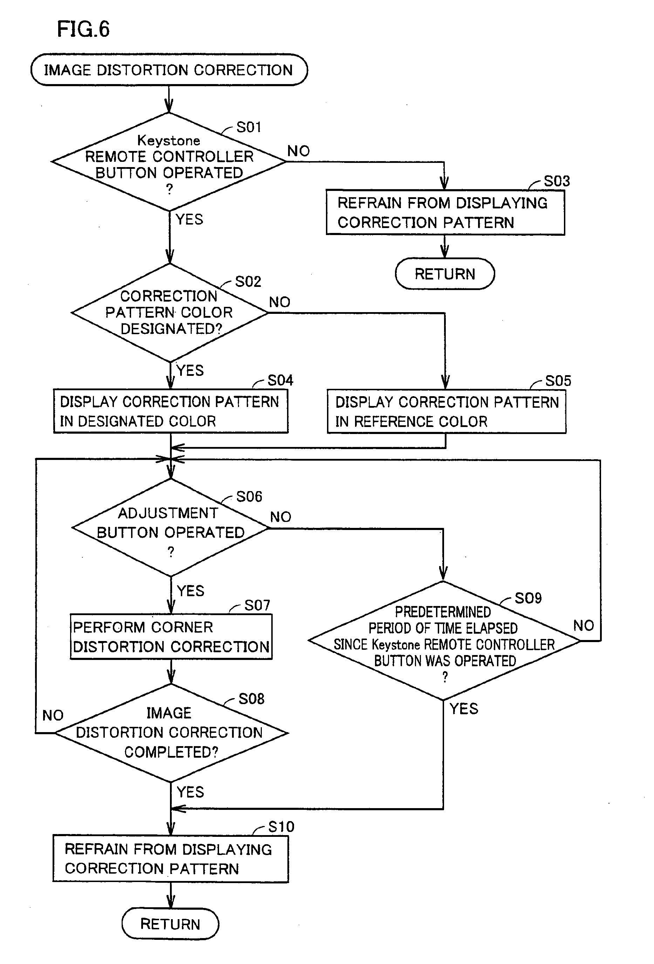

In the first embodiment, the image distortion correction process is performed with the correction pattern displayed in a color switched as controlled in a process, as will be described hereinafter with reference to Fig. 6.

Fig. 6 is a flowchart for illustrating a process according to the first embodiment for controlling how a color that is displayed is switched. Note that the Fig. 6 process has each step implemented by microcomputer 70 executing a previously stored program.

With reference to Fig. 6, initially, microcomputer 70 determines from a remote controller signal received by remote controller signal reception unit 20 (Fig. 1) whether Keystone remote controller button 56 (Fig. 3) has been operated (or pressed) (step S01). If not (NO at S01), the image distortion correction process is not selected. Accordingly, the image distortion correction image (Fig. 4) is not displayed on screen 30, and an image based on an image signal output from image signal processing circuit 64 is instead displayed on the screen (step S03).

If microcomputer 70 determines that Keystone remote controller button 56 has been operated (YES at S01), microcomputer 70 determines from a remote controller signal whether the user has designated a color for the correction pattern (step S02).

The color is designated through an operation, as will be described hereinafter. When Keystone remote controller button 56 is pressed, the image distortion correction process is selected, and image distortion correction is now available. At the time, the image distortion correction image is displayed on screen 30.

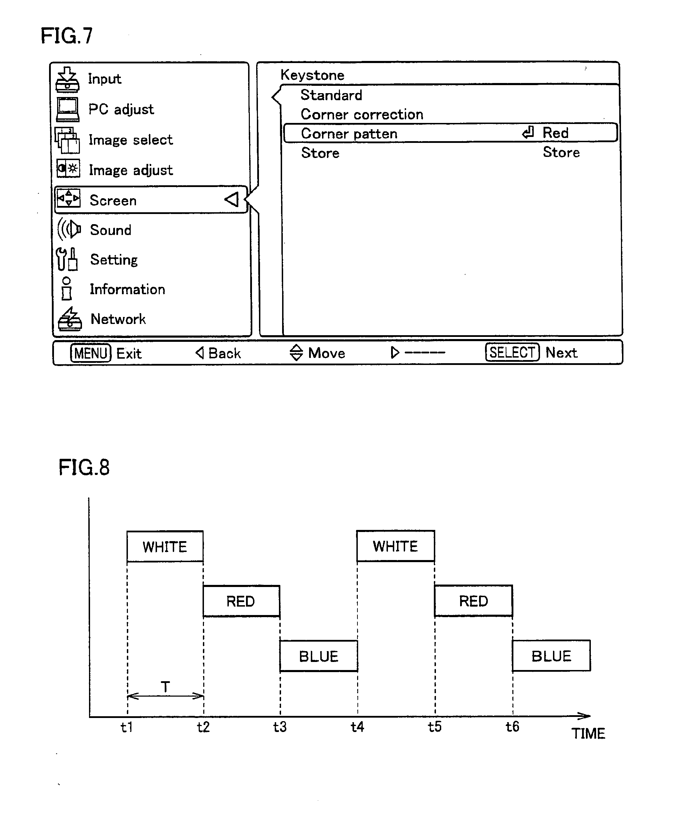

When the user desires to change a color used to display the correction pattern, or frame images PT1, PT2, PTC1-PTC4, the user presses a menu button of remote controller 50. When the menu button is pressed, such an adjustment item screen as shown in Fig. 7 is displayed on screen 30. At a left side on the screen are displayed adjustment items aligned vertically. A mark indicating that an item has been selected is displayed on a right side of the item. When the menu button is operated to move the mark upward/downward to select "Screen", as indicated in the figure, then, on a right side of the screen, adjustment items associated with image distortion correction are vertically aligned and thus displayed. Then, the menu button is operated to select an adjustment item ("Corner pattern" indicated in the figure) for the correction pattern. Furthermore, the menu button is operated to select a color used to display the correction pattern.

In the Fig. 7 example, red is selected as a color used to display the correction pattern. The color is configured to be selectable from a plurality of colors such as red, blue, white and other colors. In Fig. 7, whenever the menu button is pressed once, the plurality of colors are switched and thus displayed. When a color to be displayed is selected and Enter button 54 (Fig. 3) is pressed, the selected color is determined as a color to be displayed, and is used to display the correction pattern (or frame images PT1, PT2, PTC1-PTC4).

Again, with reference to Fig. 6, when the user designates a color for the correction pattern (YES at step S02), microcomputer 70 controls OSD circuit 72 to use the designated color to display the correction pattern (the Fig. 4 frame images PT1, PT2, PTC1-PTC4) (step S04). On the other hand, when no color is designated for the correction pattern (NO at step S02), microcomputer 70 controls OSD circuit 72 to use a predefined reference color, such as white, to display the correction pattern (step S05).

Subsequently, microcomputer 70 determines from a remote controller signal whether adjustment button 52 (Fig. 3) has been operated (or pressed) (step S06). If so (YES at S06), image distortion correction unit 68 is instructed by microcomputer 70 to employ the above described method and operate in response to an operation signal output from adjustment button 52 (i.e., the upper left corner operation signal, the upper right corner operation signal, the lower left corner operation signal, and the lower right corner operation signal) to positionally correct correction points A, B, C, D to correct a distortion of an image displayed on screen 30 (step S07).

In step S08, microcomputer 70 determines from a remote controller signal whether image distortion correction should be ended. In step S08 when Enter button 54 is pressed (YES at step S08) the image distortion correction process ends. Accordingly, the correction pattern is no longer displayed on screen 30 (step S10).

In contrast, when Enter button 54 is not pressed (NO at step S08), the control returns to step S06 and continues to wait for an input until adjustment button 52 is operated. Until Enter button 54 is pressed, steps S06 and S07 are repeated. Image distortion can thus be corrected.

In contrast, if in step S06 microcomputer 70 determines that adjustment button 52 has not been operated (NO at step S06), then, microcomputer 70 determines whether a predetermined period of time has elapsed since Keystone remote controller button 56 was pressed in step S04, i.e., whether adjustment button 52 is unoperated for the predetermined period of time (step S09). If so (YES at step S09), the control proceeds to step S10 to end the image distortion correction process, and the correction pattern is no longer displayed. If adjustment button 52 is not unoperated for the predetermined period of time (NO at step S09), the control returns to step S06 and until adjustment button 52 is operated the control continues to wait for an input.

As described above, the present invention in the first embodiment allows how a color used to display a correction pattern is switched to be controlled to allow the correction pattern to be displayed on the same screen as a projected image in a color different from that used to display the projected image. Furthermore, the present invention in the first embodiment allows switching a color that is displayed to be controlled in accordance with a color to be displayed, as selected by the user. This can enhance the correction pattern's visual observability and hence help the user to visually observe how the projected image is distorted. As a result, image distortion correction is enhanced in operability.

### Second Embodiment

The present invention in a second embodiment provides an image distortion correction process performed with a correction pattern displayed in a color switched, as controlled in a process, as will be described hereinafter with reference to Fig. 8.

With reference to Fig. 8, in the second embodiment, a color to be displayed is toggled between a preset plurality of colors whenever a predetermined period of time elapses. In the Fig. 8 example, a color used to display the correction pattern is switched to white followed by red and then by blue whenever a predetermined period of time T elapses.

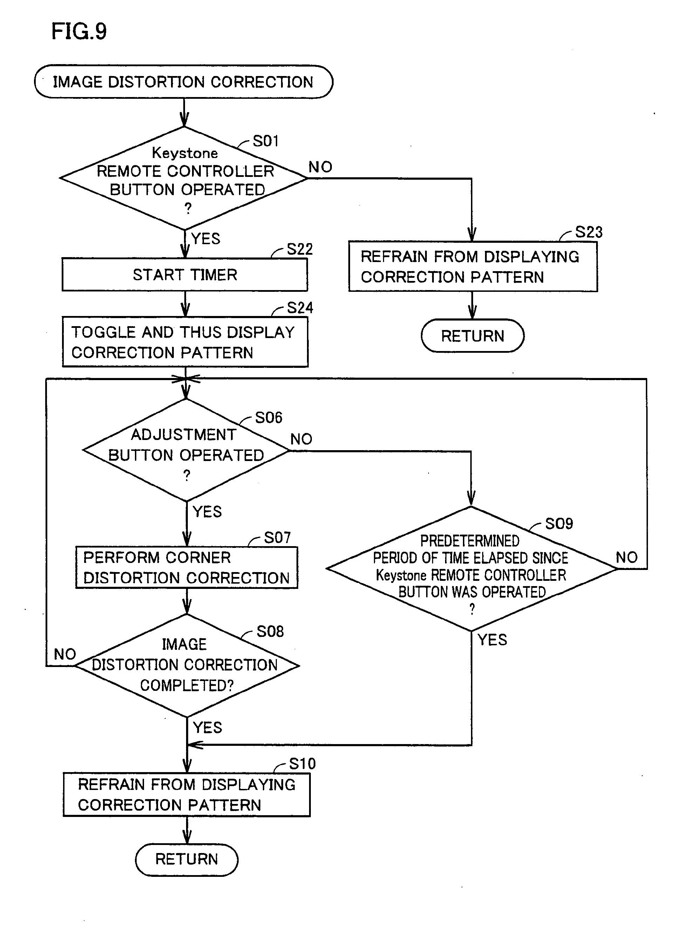

Fig. 9 is a flowchart for illustrating a process according to the second embodiment for controlling how a color that is displayed is switched. Note that the Fig. 9 process has each step implemented by microcomputer 70 executing a previously stored program.

With reference to Fig. 9, the second embodiment provides a process different from the Fig. 6 flowchart only in that steps S02-SO5 are replaced with steps S22-S24.

In Fig. 9, initially, microcomputer 70 determines from a remote controller signal received by remote controller signal reception unit 20 whether Keystone remote controller button 56 has been operated (or pressed) (step S01). If not (NO at S01), the image distortion correction process is not selected. Accordingly, the image distortion correction image (Fig. 4) is not displayed on screen 30, and an image based on an image signal output from image signal processing circuit 64 is instead displayed on the screen (step S23).

If microcomputer 70 determines that Keystone remote controller button 56 has been operated (YES at S01), microcomputer 70 starts a timer to count time (step S22), and microcomputer 70 controls OSD circuit 72 to toggle a color that is used to display the correction pattern between a plurality of colors whenever the preset, predetermined period of time T elapses, as based on a value counted by the timer (step S24). Thus, the correction pattern, or frame images PT1, PT2, PTC1-PTC4, is displayed in a color toggling as shown in Fig. 8.

As described above, the present invention in the second embodiment allows a correction pattern to be displayed in a color toggling between a preset plurality of colors whenever a predetermined period of time elapses. Even if the image distortion correction process is performed with a projected image displayed in a diversely changing color, the correction pattern's visual observability can be ensured, and the user can visually, easily observe how the projected image is distorted. As a result, image distortion correction is enhanced in operability.

### Exemplary Variation

While the Fig. 9 process has been described for an image distortion correction process performed with a correction pattern toggled in color and thus displayed, it is also possible that when the correction pattern is toggled in color and thus displayed and the user also starts to operate adjustment button 52, the toggling can be stopped so that thereafter the correction pattern may be displayed constantly in a color that was applied when the user started to operate adjustment button 52.

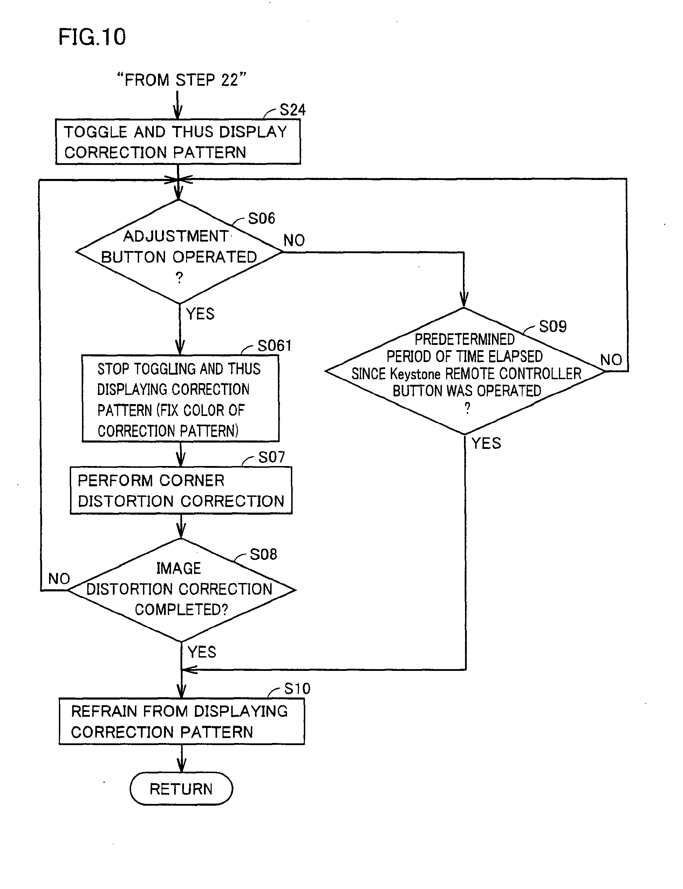

Fig. 10 is a flowchart for illustrating a process according to the second embodiment in an exemplary variation for controlling how a color that is displayed is switched. With reference to Fig. 10, the second embodiment in the exemplary variation provides a process different from the Fig. 9 flowchart only in that step S061 is additionally introduced between steps S06 and S07.

In Fig. 10 when the control determines in step S06 that adjustment button 52 has been operated (YES at S06), OSD circuit 72 is instructed by microcomputer 70 to stop toggling a color that is displayed (step S061). This allows the correction pattern to be thereafter displayed constantly in a color that was applied when the user operated adjustment button 52.

Thus the present exemplary variation allows a color that is displayed to be switched as controlled in a process so that a correction pattern is displayed in a toggled color, and the user operating adjustment button 52 is regarded as the user designating a color to be displayed and the color to be displayed is thus fixed. In other words, the correction pattern is displayed substantially in a color selected by the user. This allows the correction pattern to be automatically displayed in an optimum color without requiring the user to perform an operation to designate a color, and can thus improve operability in image distortion correction.

If in Fig. 10 at step S061, toggling and thus displaying is stopped, and in that condition, the user has finished operating adjustment button 52, then, thereafter, when a predetermined period of time elapses, toggling and thus displaying may be resumed.

### Third Embodiment

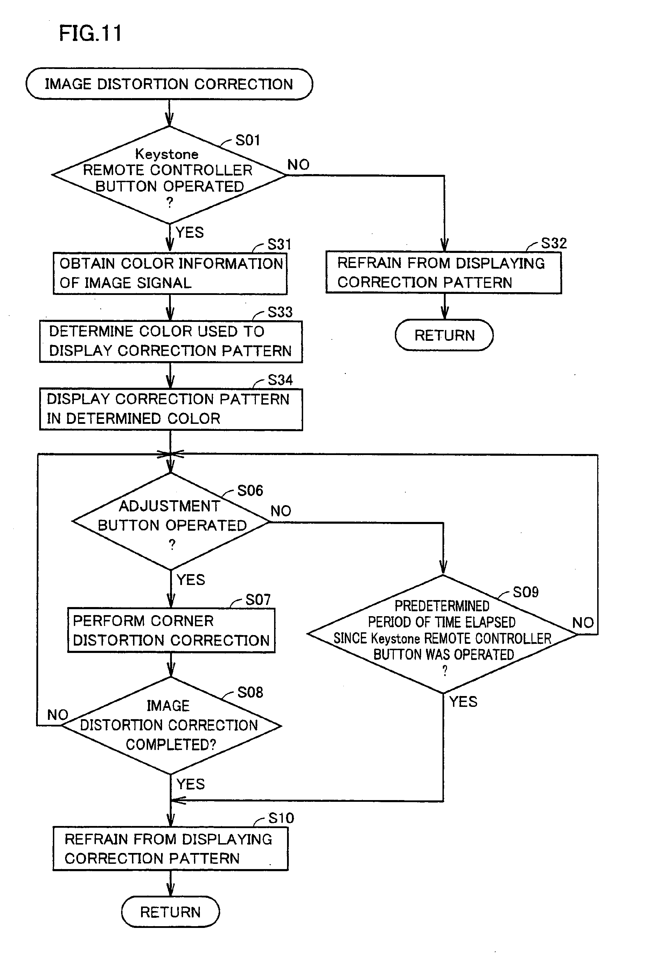

A third embodiment provides an image distortion correction process performed with a correction pattern displayed in a color switched, as controlled in a process, as will be described hereinafter with reference to Fig. 11.

Fig. 11 is a flowchart for illustrating a process according to the third embodiment for controlling how a color that is displayed is switched. Note that the Fig. 11 process has each step implemented by microcomputer 70 executing a previously stored program.

With reference to Fig. 11, the third embodiment provides a process different from the Fig. 6 flowchart only in that steps S02-SO5 are replaced with steps S31-S34.

In Fig. 11, initially, microcomputer 70 determines from a remote controller signal received by remote controller signal reception unit 20 whether Keystone remote controller button 56 has been operated (or pressed) (step S01). If not (NO at S01), the image distortion correction process is not selected. Accordingly, the image distortion correction image (Fig. 4) is not displayed on screen 30, and an image based on an image signal output from image signal processing circuit 64 is instead displayed on the screen (step S32).

If microcomputer 70 determines that Keystone remote controller button 56 has been operated (YES at S01), microcomputer 70 reads color information of an image signal from image signal processing circuit 64 (step S31), and determines from the read color information a color used to display the correction pattern (step S33).

More specifically, microcomputer 70 selects a hue for the correction pattern in accordance with at least one of the hue, saturation and lightness of an image signal, as based on the read color information, and outputs the selected hue to OSD circuit 72. OSD circuit 72 is instructed by microcomputer 70 to read OSD data from memory about a correction pattern that has the selected hue as a color used to display it, and output the OSD data to composite unit 66. Composite unit 66 composites the OSD data about the correction pattern with an image signal output from image signal processing circuit 64 to generate a composite image signal in the form of image data. By such an operation, the correction pattern is displayed in a color determined in step S33 (step S34).

In selecting a hue, for example, a color complementary to the hue of an image signal is selected as a hue for the correction pattern. The correction pattern displayed in the complementary color (a hue positionally opposite in the color wheel) can be perceived as a color of a combination most intensified in contrast. The correction pattern can thus be visually more observable, and the user can visually, easily observe how a projected image is distorted. This allows image distortion correction to be enhanced in operability.

Note that a hue may not be selected for the correction pattern, as based only on the hue of the entirety of an image signal; it may be selected for the correction pattern, as based on that information of the image signal of the hue, saturation or lightness of a portion in a vicinity of frame images PT1, PT2, PTC1-PTC4 (Fig. 4) of the correction pattern.

As has been described above, the present invention in the third embodiment allows an image signal's color information to be considered in switching a color used to display a correction pattern. Even if the image distortion correction process is performed with a projected image displayed in a diversely changing color, the correction pattern's visual observability can be ensured. In particular, a color complementary to the hue of the image signal can be selected as a color used to display the correction pattern. This allows the correction pattern to be easily observed, and the user to visually, easily observe how the projected image is distorted. As a result, image distortion correction is enhanced in operability.

While the embodiments have been described for a projector provided in the form of a liquid crystal projector, the present invention is not limited thereto. For example, the present invention is applicable to a projector in a digital light processing (DLP)® system or a similar, different system.

Although the present invention has been described and illustrated in detail, it is clearly understood that the same is by way of illustration and example only and is not to be taken by way of limitation, the scope of the present invention being interpreted by the terms of the appended claims.

## Claims

1. A projection image display apparatus comprising:
an image signal processing unit (64) which receives and converts a first image signal to generate a second image signal representing an image to be projected;
an image distortion correction unit (68) which corrects said second image signal in response to a correction point on a projected image being changed by an operation done by a user; and
a distortion correction screen generation unit (72) which operates, when an image distortion correction process is selected in response to an operation done by the user, to superpose on the projected image a correction pattern used to allow the user to designate the correction point, and thus display said correction pattern and the projected image on a single screen, said distortion correction screen generation unit (72) including a switching control unit which switches a color used to display said correction pattern when said image distortion correction process is performed.

2. The projection image display apparatus according to claim 1, wherein said switching control unit operates to allow said correction pattern to be displayed in a color designated by an operation done by the user.

3. The projection image display apparatus according to claim 1, wherein said switching control unit toggles the color that is used to display said correction pattern between a preset plurality of colors whenever a predetermined period of time elapses.

4. The projection image display apparatus according to claim 3, wherein when said correction pattern is displayed with the color thereof toggled and changing the correction point on the projected image is also started in response to an operation done by the user, said switching control unit fixes the color that is used to display said correction pattern to display said correction pattern in a color that was applied when changing the correction point was started.

5. The projection image display apparatus according to claim 1, wherein said switching control unit switches the color that is used to display said correction pattern in accordance with at least one of hue, saturation and lightness of said second image signal.

6. The projection image display apparatus according to claim 5, wherein said switching control unit selects a color complementary to the hue of said second image signal as the color that is used to display said correction pattern.
